# EUROPÄISCHE PATENTSCHRIFT

(11) **EP 1 110 364 B1**
(45) Veröffentlichungstag und Bekanntmachung des Hinweises auf die Patenterteilung: **30.04.2008**
(21) Anmeldenummer: 98939465.5
(22) Anmeldetag: 02.09.1998
(51) Int. Cl.: H04M 1/02

(54) **FLACHANZEIGE UND MOBILFUNKTELEFON MIT EINER FLACHANZEIGE**
FLAT SCREEN AND MOBILE TELEPHONE WITH FLAT SCREEN
ECRAN PLAT ET TELEPHONE MOBILE A ECRAN PLAT

(43) Veröffentlichungstag der Anmeldung: 27.06.2001
(73) Patentinhaber: Swisscom (Schweiz) AG, 3050 Bern (CH)
(72) Erfinder: BLANK, Judith, CH-8500 Frauenfeld (CH); RITTER, Rudolf, CH-3052 Zollikofen (CH)
(74) Vertreter: Vogel, Dany
(86) Internationale Anmeldenummer: PCT/CH1998/000376
(87) Internationale Veröffentlichungsnummer: WO 2000/014941

(56) Entgegenhaltungen:
- GB-A- 2 295 241
- US-A- 5 566 224
- PATENT ABSTRACTS OF JAPAN vol. 098, no. 009, 31. Juli 1998 & JP 10 108769 A (ALMEX INC), 28. April 1998
- PATENT ABSTRACTS OF JAPAN vol. 098, no. 009, 31. Juli 1998 & JP 10 093674 A (KOKUSAI ELECTRIC CO LTD), 10. April 1998
- PATENT ABSTRACTS OF JAPAN vol. 010, no. 246 (M-510), 23. August 1986 & JP 61 075033 A (SEIKO EPSON CORP), 17. April 1986

## Beschreibung

Die vorliegende Erfindung betrifft eine Flachanzeige. Die vorliegende Erfindung betrifft insbesondere eine Flachanzeige für ein elektrisch autonomes Gerät, zum Beispiel ein Mobilfunktelefon.

Mobilfunktelefone werden immer miniaturisierter und können daher problemlos immer in der Tasche oder in einer Handtasche mitgenommen werden. Dasselbe gilt auch für andere tragbare elektronische Geräte, wie zum Beispiel Taschenrechner, Laptops, Palmtops, usw.

In der Patentschrift US 5566224 wird ein funkbasiertes Kommunikationsgerät beschrieben, das mit einer Anzeige gekoppelt ist, auf der durch das Kommunikationsgerät Informationen angezeigt werden können. Gemäss der Patentschrift US 5566224 kann die Anzeige zum Darstellen der Informationen hinter einem durchsichtigen Fenster in einer Spiegeloberfläche angebracht sein oder die Anzeige kann so positioniert sein, dass sie die Informationen auf einen Teil der Spiegeloberfläche projiziert. In der Patentschrift US 5566224 wird zudem auf die Möglichkeit hingewiesen, dass Teile der Spiegeloberfläche steuerbar von einem reflektierenden in einen nicht reflektierenden, durchsichtigen Zustand gesteuert werden können, so dass Informationen, die auf der hinter der Spiegeloberfläche angebrachten Anzeige dargestellt werden, für einen Betrachter auf der Vorderseite der Spiegeloberfläche sichtbar sind.

Es ist ein Ziel dieser Erfindung, ein Mobilfunktelefon mit anderen Funktionen zu versehen, die unterwegs auch immer wieder gebraucht werden.

Gemäss dieser Erfindung wird dieses Ziel durch die Merkmale des Anspruches 1 erzielt.

Insbesondere wird dieses Ziel dank einer Flachanzeige erreicht, die elektrisch angesteuert werden kann, so dass die Anzeigefläche reflektierend gemacht werden kann.

Auf diese Weise kann die Anzeige des Geräts auch als praktischer Taschenspiegel verwendet werden.

Vorzugsweise kann die Anzeige elektrisch angesteuert werden, um reflektierend zu werden, wenn keine Informationen angezeigt werden, insbesondere im Stand-by-Modus. In einer noch bevorzugten Variante der Erfindung kann auch nur ein Teil der Anzeigefläche reflektierend gemacht werden; Informationen und/oder Werbungen können auf dem übrigen Teil der Anzeigefläche angezeigt werden. Auf diese Weise können die Benutzer wirkungsvoll auf wichtige Informationen und insbesondere auf Dienstanbieter-Firmennamen und Logos wirkungsvoll aufmerksam gemacht werden.

Die Erfindung wird mit Hilfe der durch die beigelegten Figuren illustrierten Beschreibung besser verstanden. Es zeigen

Die Figur 1 eine Draufsicht auf ein Mobilfunktelefon mit einer erfindungsgemässen Anzeige, die als Spiegel angesteuert und gebraucht wird.

Die Figur 2 eine Draufsicht auf das gleiche Mobilfunktelfon, wo aber ein Teil der Anzeige als Spiegel angesteuert wird, während Informationen auf dem übrigen Teil angezeigt werden.

Die Figur 3 eine Draufsicht auf das gleiche Mobilfunktelefon, wo aber Informationen auf der ganzen Anzeige angezeigt werden.

Die Figur 4 einen sehr stark vergrösserten Schnitt einer Anzeige gemäss der Erfindung.

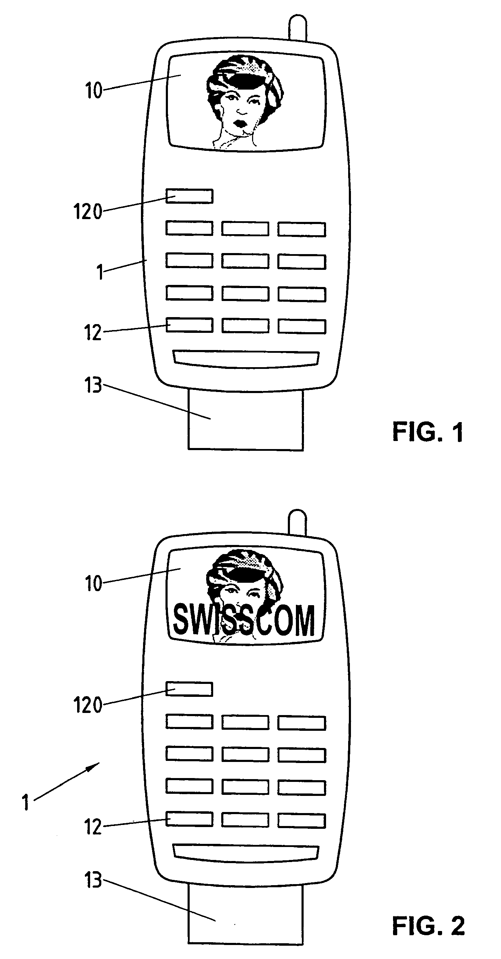

Die Figur 1 zeigt ein Mobilfunktelefon 1 im Stand-by-Modus mit einer erfindungsgemässen Anzeige 10. Die erfindungsgemässe Anzeige 10 wird durch einen nicht dargestellten Anzeigetreiber elektrisch so angesteuert, dass sie als reflektierender Spiegel angewendet werden kann, in welchem der Benutzer sich widerspiegeln kann. Der reflektierende oder nicht reflektierende Modus der Anzeige 10 kann vorzugsweise auch mit einem Bedienungselement, beispielsweise einer Bedienungstaste 120, vom Benutzer angewählt werden. Mit anderen Bedienungselementen 12 können auch andere Funktionen des Mobilfunktelefons betätigt werden. Das Mobilfunktelefon umfasst ausserdem vorzugsweise eine Identifizierungskarte 13, beispielsweise eine SIM-Karte (Subscriber Identity Module), um den Benutzer in einem Mobilfunknetz zu identifizieren. Die Karte 13 enthält vorzugsweise einen nicht dargestellten Prozessor, der auch die Anzeige 10 ansteuern kann. Das Mobilfunktelefon, bzw. die Identifizierungskarte, können vorzugsweise Kurzmeldungen empfangen, beispielsweise SMS- und/oder USSD-Kurzmeldungen, die von einem anderen Endgerät im Mobilfunknetz ausgesendet werden und mit denen der Zustand der Anzeige auch angesteuert werden kann.

Die Figur 2 zeigt das gleiche Mobilfunktelefon, wo aber nur ein Teil der Anzeige 10 als Spiegel angesteuert ist, während Informationen auf dem übrigen Teil angezeigt werden. Die Anzeige wird beispielsweise in diesem Zustand angesteuert, wenn eine Meldung ankommt oder wenn der Dienst eines externen Dienstanbieters, beispielsweise eines Finanzinstituts oder eines Informationanbieters, beansprucht wird. Informationen, beispielsweise Informationen über den angewählten Dienst, insbesondere eine Identifizierung des Anrufenden bzw. des Dienstanbieters, beispielsweise die Rufnummer, der Name und/oder das Logo dieses Dienstanbieters, wird in diesem Fall über einem reflektierenden Hintergrund angezeigt.

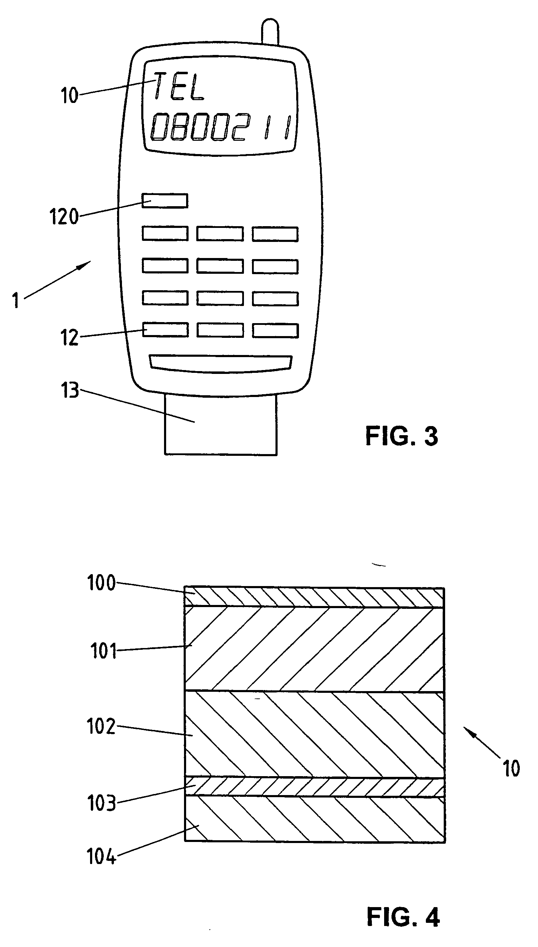

Die Figur 3 zeigt das gleiche Mobilfunktelefon in einem Zustand, wo die gesamte Fläche der Anzeige 10 zur Anzeige von Informationen genutzt wird.

Die Figur 4 zeigt einen Schnitt einer Anzeige gemäss der Erfindung. Die Anzeige 10 umfasst eine transparente äusserste Schicht 100 aus nicht reflektierendem Glas oder Kunststoff, eine Vordergrund-Anzeigeschicht 101 unter der Oberschicht 100 mit einem ersten Flüssigkristalielement, eine Hintergrund-Anzeigeschicht 102 unter der Schicht 101 mit einem zweiten Flüssigkristallelement, eine reflektierende Schicht 103 unter der Schicht 102 und ein Substrat 104 unter der reflektierenden Schicht 103.

Die Vordergrund-Anzeigeschicht 101 besteht aus einer konventionellen Matrixanzeige, beispielsweise aus einem passiven oder aktiven Flüssigkristallelement. Die Schicht 101 wird vorzugsweise als eine Matrixanzeige ausgebaut, so dass jeder Pixel individuell angesteuert werden kann. Wenn ein erster Satz von Spannungen durch den nicht dargestellten Anzeigetreiber auf den nicht dargestellten Elektroden, die einen Pixel ansteuern, angelegt wird, bekommt dieser Pixel eine erste Farbe, vorzugsweise schwarz; wenn ein zweiter Satz von Spannungen angelegt wird, vorzugsweise wenn Null-Spannungen angelegt werden, wird dieser Pixel durchsichtig, so dass der Betrachter die Hintergrundschichten 102 oder 103 sehen kann. In einer Variante können die Pixel statt oder zusätzlich zu Schwarz eine andere Farbe oder verschiedene Graustufen bzw. Farbtöne annehmen.

Die Hintergrund-Anzeigeschicht 102 besteht aus einer konventionellen Matrixanzeige, beispielsweise aus einem passiven oder aktiven Flüssigkristallelement, das elektrisch von einem durchsichtigen Zustand in einen anderen farbigen Zustand, beispielsweise in einen weissen Zustand, geändert werden kann. Die Schicht 102 wird vorzugsweise als eine Matrixanzeige ausgebaut, so dass jeder Pixel individuell durchsichtig oder weiss angesteuert werden kann. Die Schicht 102 ist vorzugsweise durchsichtig, wenn keine Spannung auf die Elektroden angelegt wird. In einer Variante können die Pixel statt oder zusätzlich zu Weiss eine andere Farbe oder verschieden Graustufen bzw. Farbtöne annehmen.

Der Fachmann wird verstehen, dass die beiden Anzeigeschichten 101 und 102, je nach angewendeter Flüssigkristalltechnologie, aus mehreren verschiedenen Schichten bestehen können, einschliesslich beispielsweise mehrere Elektrodenschichten, Glasschichten, Flüssigkristallschichten, eventuelle Polarisierungsschichten, usw.

Die Schicht 103 besteht beispielsweise aus einem Aluminiumfilm oder aus einem anderen reflektierenden Metall und reflektiert das Licht nach aussen. Die innere Schicht 104 ist ein Substrat, beispielsweise aus Metall oder Kunststoff, um die gesamte Anzeige robuster zu machen. Die Schichten 103 und 104 können auch aus Kunststoff sein, beispielsweise wenn die Anzeige flexibel sein muss.

Informationen, beispielsweise Text und/oder Bilder, werden vorzugsweise in Schwarz mit der Schicht 101 über einem weissen Hintergrund 102 dargestellt, wie auf der Figur 3 dargestellt ist. Wenn jedoch die Anzeigeschicht 102 durchsichtig ist, können Informationen in Schwarz über einem reflektierenden Hintergrund dargestellt werden, wie auf der Figur 2 gezeigt. Wenn beide Schichten 101 und 102 durchsichtig sind, vorzugsweise wenn keine Spannung angelegt wird, sieht der Betrachter nur die reflektierende Aluminium-Schicht 103, in welcher er sich widerspiegeln kann.

Der Fachmann wird verstehen, dass die erfindungsgemässe Anzeige nicht mit Flüssigkristallanzeigen realisiert werden muss, sondern dass auch andere Arten von Flachmatrixanzeige-Technologien im Rahmen dieser Erfindung angewendet werden können. Ebenfalls können mehr als zwei Anzeigeschichten 101 und 102 angewendet werden, um beispielsweise farbige Anzeigen oder komplexere Darstellungen zu ermöglichen. Die Anzahl Pixel in jeder Schicht kann je nach Anwendung sehr unterschiedlich sein, beispielsweise zwischen 30X30 bis 1000X1280 Pixel. Es ist auch im Rahmen dieser Erfindung möglich, eine Hintergrund-Anzeigeschicht 102 zu verwenden, die nicht als Matrix angesteuert wird; in diesem Fall ist die gesamte Schicht entweder farbig (weiss) oder durchsichtig. Die Grösse und die Form der verschiedenen Schichten können für bestimmte Anwendungen unterschiedlich sein, so dass beispielsweise nur ein Teil der Anzeige reflektierend gemacht werden kann. Je nach angewandter Technologie kann jeder Pixel der Hintergrund-Anzeigeschicht 102 von einem zweiten farbigen Zustand - beispielsweise Weiss - in einen reflektierenden Zustand geändert werden; in diesem Fall wird die Reflektierungsschicht 103 nicht benötigt. Die Anzeige 10, insbesondere die reflektierende Schicht 103, kann auch konkav oder konvex sein, um den Widerspiegelungswinkel zu kontrollieren.

Die vorliegende Erfindung erlaubt es, Mobilgeräte mit einer Anzeige auch als praktischen Taschenspiegel zu benutzen. Ausserdem bekommt das Gerät ein ungewöhnliches und exklusives Design. Schlussendlich können Benutzer sehr effektiv auf wichtige oder Werbe-Informationen aufmerksam gemacht werden, indem diese Informationen über einem reflektierenden Hintergrund angezeigt werden.

## Patentansprüche

1. Flachanzeige (10) für ein elektrisch autonomes Gerät (1), auf welcher Informationen anzeigbar sind, und welche Flachanzeige (10) elektrisch ansteuerbar ist, um reflektierend zu werden, **dadurch gekennzeichnet,**
**dass** die Flachanzeige (10) eine Hintergrund-Anzeigeschicht (102, 103) umfasst, die mit elektrischen Steuerungssignalen von einem reflektierenden in einen nicht reflektierenden, farbigen Zustand änderbar ist, wobei die Hintergrund-Anzeigeschicht (102, 103) eine Anzeigeschicht (102), die mit elektrischen Steuerungssignalen von einem durchsichtigen in einen farbigen Zustand ansteuerbar ist, und eine reflektierende Schicht (103) umfasst, und
**dass** die Flachanzeige (10) eine über der Hintergrund-Anzeigeschicht (102, 103) angeordnete Vordergrund-Anzeigeschicht (101) umfasst, die mit anderen elektrischen Steuerungssignalen von einem durchsichtigen in einen nicht durchsichtigen Zustand änderbar ist.

2. Flachanzeige gemäss Anspruch 1, **dadurch gekennzeichnet, dass** sie elektrisch ansteuerbar ist, so dass nur ein Teil der benannten Anzeige reflektierend wird.

3. Flachanzeige gemäss Anspruch 2, **dadurch gekennzeichnet, dass** Text- und/oder Bild-Informationen auf dem übrigen, nicht reflektierenden Teil der Anzeige anzeigbar sind.

4. Flachanzeige gemäss einem der Ansprüche 1 bis 3, **dadurch gekennzeichnet, dass** die reflektierende Schicht (103) konkav oder konvex ist.

5. Flachanzeige gemäss einem der Ansprüche 1 bis 4, **dadurch gekennzeichnet, dass** die benannte Vordergrund-Anzeigeschicht (101) eine Flüssigkristallanzeige umfasst.

6. Flachanzeige gemäss einem der Ansprüche 1 bis 5, **dadurch gekennzeichnet, dass** die benannte Hintergrund-Anzeigeschicht (102, 103) eine Flüssigkristallanzeige umfasst.

7. Flachanzeige gemäss einem der Ansprüche 1 bis 6, **dadurch gekennzeichnet, dass** die benannte reflektierende Schicht (103) einen Film aus Aluminium umfasst.

8. Mobilfunktelefon (1) mit einer Flachanzeige gemäss einem der Ansprüche 1 bis 7.

9. Mobilfunktelefon gemäss Anspruch 8, **dadurch gekennzeichnet, dass** es eine ldentifizierungskarte (13) enthält, dass ein Prozessor in der ldentifizierungskarte integriert ist und dass der reflektierende Zustand der Anzeige mit diesem Prozessor ansteuerbar ist.

10. Mobilfunktelefon gemäss Anspruch 8 oder 9, **dadurch gekennzeichnet, dass** der reflektierende Zustand der Anzeige mit Datenmeldungen fernsteuerbar ist.

11. Mobilfunktelefon gemäss einem der Ansprüche 8 bis 10, **dadurch gekennzeichnet, dass** es ein Bedienungselement (120) umfasst, um den reflektierenden oder nicht reflektierenden Zustand der Anzeige (10) zu steuern.

12. Mobilfunktelefon gemäss einem der Ansprüche 8 bis 11, **dadurch gekennzeichnet, dass** die Anzeige reflektierend ist, wenn das Mobilfunktetefon ausgeschaltet ist.

## Claims

1. A flat panel display (10) for an electrically autonomous device (1), on which flat panel display (10) data may be displayed and which may be electrically activated to become reflective, **characterised in that**
the flat panel display (10) comprises a background display layer (102, 103), which may be changed with electrical control signals from a reflective to a non-reflective, coloured state, the background display layer (102, 103) comprising a display layer (102), which may be activated with electrical control signals from a transparent into a coloured state, and a reflective layer (103), and
the flat panel display (10) comprises a foreground display layer (101) arranged over the background display layer (102, 103), which foreground display layer (101) may be changed with other electrical control signals from a transparent into a non-transparent state.

2. A flat panel display according to claim 1, **characterised in that** it may be electrically activated such that only part of the said display becomes reflective.

3. A flat panel display according to claim 2, **characterised in that** text and/or image data may be displayed on the remaining, non-reflective part of the display.

4. A flat panel display according to any one of claims 1 to 3, **characterised in that** the reflective layer (103) is concave or convex.

5. A flat panel display according to any one of claims 1 to 4, **characterised in that** the said foreground display layer (101) comprises a liquid crystal display.

6. A flat panel display according to any one of claims 1 to 5, **characterised in that** the said background display layer (102, 103) comprises a liquid crystal display.

7. A flat panel display according to any one of claims 1 to 6, **characterised in that** the said reflective layer (103) comprises a film of aluminium.

8. A mobile radio telephone (1) having a flat panel display according to any one of claims 1 to 7.

9. A mobile radio telephone according to claim 8, **characterised in that** it contains an identification card (13), **in that** a processor is integrated into the identification card and **in that** the reflective state of the display may be activated with this processor.

10. A mobile radio telephone according to claim 8 or claim 9, **characterised in that** the reflective state of the display may be remotely controlled with data messages.

11. A mobile radio telephone according to any one of claims 8 to 10, **characterised in that** it comprises an operating element (120) for controlling the reflective or non-reflective state of the display (10).

12. A mobile radio telephone according to any one of claims 8 to 11, **characterised in that** the display is reflective when the mobile radio telephone has been switched off.

## Revendications

1. Écran plat (10) pour un appareil autonome électrique (1), sur lequel les informations peuvent être affichées, et lequel écran plat (10) peut être commandé électriquement, pour être réfléchissant, **caractérisé**
**en ce que** l'écran plat (10) comprend une couche d'affichage d'arrière plan (102, 103), qui peut être modifié par des signaux de commande électriques en passant d'un état réfléchissant à un état en couleur non réfléchissant, où la couche d'affichage d'arrière plan (102, 103) comprend une couche d'affichage (102), qui peut être commandée par des signaux de commande électriques en passant d'un état transparent en un état en couleur, et une couche réfléchissante (103), et
**en ce que** l'écran plat (10) comprend une couche d'affichage d'avant-plan (101) disposée au-dessus de la couche d'affichage d'arrière plan (102, 103), qui peut être modifiée grâce à d'autres signaux de commande électriques passant d'un état transparent en un état non transparent.

2. Écran plat selon la revendication 1, **caractérisé en ce qu'**il peut être commandé électriquement, de sorte que seul une partie de l'affichage précité est réfléchissante.

3. Écran plat selon la revendication 2, **caractérisé en ce que** des informations de texte et/ou vidéo peuvent être affichées sur la partie non réfléchissante restante de l'écran.

4. Écran plat selon l'une des revendications 1 à 3, **caractérisé en ce que** la couche réfléchissante (103) est concave ou convexe.

5. Écran plat selon l'une des revendications 1 à 4, **caractérisé en ce que** la couche d'affichage d'avant-plan précitée (101) comprend un affichage à cristaux liquides.

6. Écran plat selon une des revendications 1 à 5, **caractérisé en ce que** la couche d'affichage d'arrière plan précitée (102, 103) comprend un affichage à cristaux liquides.

7. Écran plat selon l'une des revendications 1 à 6, **caractérisé en ce que** la couche réfléchissante précitée (103) comprend une couche en aluminium.

8. Téléphone mobile (1) comportant un écran plat selon l'une des revendications 1 à 7.

9. Téléphone mobile selon la revendication 8, **caractérisé en ce qu'**il contient une carte d'identification (13), **en ce qu'**un processeur est intégré dans la carte d'identification et **en ce que** l'état réfléchissant de l'écran peut être commandé par ce processeur.

10. Téléphone mobile selon la revendication 8 ou 9, **caractérisé en ce que** l'état réfléchissant de l'écran peut être commandé à distance par des notifications.

11. Téléphone mobile selon une des revendications 8 à 10, **caractérisé en ce qu'**il comprend un élément de commande (120), pour commander l'état réfléchissant ou non réfléchissant de l'écran (10).

12. Téléphone mobile selon l'une des revendications 8 à 11, **caractérisé en ce que** l'écran est réfléchissant, lorsque le téléphone mobile est coupé.
